# EUROPÄISCHE PATENTSCHRIFT

(11) **EP 1 997 984 B1**
(45) Veröffentlichungstag und Bekanntmachung des Hinweises auf die Patenterteilung: **20.06.2012**
(21) Anmeldenummer: 08153975.1
(22) Anmeldetag: 02.04.2008
(51) Int. Cl.: E05B 65/20, G07C 9/00, H04B 13/00

(54) **Kraftfahrzeugtürgriff mit Annäherungssensor**
Motor vehicle door grip with proximity sensor
Poignée de porte de véhicule automobile dotée d'un capteur de proximité

(30) Priorität: 07.05.2007 DE 102007021812
(43) Veröffentlichungstag der Anmeldung: 03.12.2008
(73) Patentinhaber: Huf Hülsbeck & Fürst GmbH & Co. KG, 42551 Velbert (DE)
(72) Erfinder: Van den Boom, Andreas, 45309 Essen (DE); Witte, Martin, 48683 Ahaus (DE); Steegmann, Bernd, 42579 Heiligenhaus (DE)
(74) Vertreter: Zenz

(56) Entgegenhaltungen:
- EP-A1- 1 235 190
- EP-A1- 1 319 777
- EP-A1- 1 510 637
- DE-A1-102004 046 903
- DE-A1-102004 048 956
- DE-A1-102005 015 802
- DE-A1-102005 035 935
- DE-C2- 19 861 116

## Beschreibung

Die Erfindung betrifft einen Kraftfahrzeugtürgriff. Insbesondere betrifft die Erfindung einen Kraftfahrzeugtürgriff mit einem Annäherungssensor, wobei als Teil des Sensors eine Sensorelektrode am Kraftfahrzeugtürgriff ausgebildet ist.

Türgriffe von Kraftfahrzeugen sind im Stand der Technik mit unterschiedlichen Erfassungs- bzw. Sensoranordnungen ausgebildet, um eine Betätigung oder Annäherung eines Benutzers zu erfassen.

Die DE 10 2005 035 935 A1 offenbart einen Kraftfahrzeugtürgriff, welcher eine Sensorelektrode eines kapazitiven Annäherungssensors aufweist. Mit der Sensorelektrode ist eine Steuer- und Auswerteschaltung gekoppelt. Wenn sich ein Benutzer mit einer Hand dem Türgriff nähert wird eine Kapazitätsänderung des Annäherungssensors erfasst.

Aus dem Stand der Technik sind weiterhin Konzepte und Anwendungen bekannt, bei denen das durch den Benutzerkörper bereitgestellte elektrische System in eine Funktionsanordnung einbezogen wird. Eine Signalübertragung über den menschlichen Körper wird in der DE 10 2004 048 956 A1 beschrieben. Dort ist die Signalstrecke zwischen einem Fahrzeug und einem vom Benutzer mitgeführten ID-Geber teilweise durch den menschlichen Körper gebildet.

Bei derartigen annäherungssensitiven Kraftfahrzeugtürgriffen besteht jedoch der Bedarf für Verbesserungen, insbesondere ist die Verlässlichkeit der Erfassung bei Änderung von Umgebungsbedingungen (z.B. einsetzendem Regen oder ähnlichem) verbesserungsfähig.

Aufgabe der Erfindung ist es daher, einen Kraftfahrzeugtürgriff zu schaffen, welcher eine verläßliche Detektion einer Annäherung eines Benutzers zur Verfügung stellt bei geringer Zahl von Fehlerfassungen.

Diese Aufgabe wird durch einen Kraftfahrzeugtürgriff mit den Merkmalen gemäß Patentanspruch 1 sowie ein Verfahren gemäß Patentanspruch 9 gelöst.

Erfindungsgemäß weist der Kraftfahrzeugtürgriff der eingangs genannten Art eine zweite Sensorelektrode auf, die von der ersten Sensorelektrode beabstandet angeordnet ist. Die erste und zweite Sensorelektrode sind jeweils im Zugriffsbereich des Türgriffs derart angeordnet, dass durch einen zugreifenden Benutzer eine kapazitive Kopplung zwischen wenigstens einer der Elektroden und dem Körper des Benutzers herstellbar ist.

Die erste Sensorelektrode ist mit einer Steuereinrichtung gekoppelt, welche an die erste Sensorelektrode eine Sendespannung anlegen kann. Die Steuereinrichtung bringt demnach die Sensorelektrode auf ein Potential gegenüber Masse, wobei die entsprechende Sendespannung ein beliebiges zeitliches Muster aufweisen kann.

Die zweite Sensorelektrode ist mit einer Auswerteeinrichtung gekoppelt, welche an der zweiten Sensorelektrode eingehende Signale auswerten kann. Die Auswerteeinrichtung erfasst Spannungssignale, die in die zweite Sensorelektrode eingekoppelt werden. Da die Auswerteeinrichtung entsprechende sensitiv ausgebildet ist, sind die eingekoppelten Spannungssignale teilweise Störsignale aus der Umgebung der zweiten Sensorelektrode. Die erste und zweite Sensorelektrode sind jedoch derart in einem Abstand angeordnet, dass die an die erste Sensorelektrode angelegten Signale, je nach Sendespannung, in die zweite Elektrode einkoppeln. An der zweiten Elektrode wird dementsprechend eine Überlagerung aus Störsignalen und von der ersten Elektrode übermittelten Signalen eingekoppelt bzw. empfangen und durch die Auswerteeinrichtung erfasst.

Die Steuereinrichtung und die Auswerteeinrichtung sind derart gekoppelt, dass die von der Steuereinrichtung angelegte Sendespannung beeinflussbar ist. Die Beeinflussung der Steuereinrichtung erfolgt in Abhängigkeit von den durch die Auswerteeinrichtung erfassten Signalen. Je nach Art oder Stärke der durch die Auswerteeinrichtung erfassten Signale kann die Steuereinrichtung bezüglich der Aufprägung der Sendespannung beeinflussbar sein. Die Auswerteschaltung kann beispielsweise die Steuereinrichtung zur Erhöhung oder Verringerung der Sendespannung veranlassen. Ferner kann das zeitliche Muster der Sendespannung ebenfalls auf Veranlassung der Auswerteeinrichtung geändert werden. Es ist ebenfalls möglich, dass die Kopplung zwischen Auswerteeinrichtung und Steuereinrichtung bidirektional ausgebildet ist, so dass in beiden Richtungen Informationen ausgetauscht werden können.

Gegenüber dem Stand der Technik weißt der erfindungsgemäße Kraftfahrzeugtürgriff eine Anordnung mit zwei Sensorelektroden auf. Es kommt entsprechend bei der Erfindung nicht auf eine Kapazität an, welche durch eine einzige Elektrode und andererseits das Kraftfahrzeug gebildet ist.

Zwischen den Sensorelektroden ist eine Kopplungsstrecke bzw. Übertragungsstrecke aufgebaut, wobei die an die erste Sensorelektrode angelegte Spannung als Sendespannung betrachtet werden kann. Aufgrund der Kopplung zwischen erster Sensorelektrode und zweiter Sensorelektrode kann zwischen den Elektroden eine kapazitive Signalübermittlung stattfinden. Die Qualität der Übertragung ist dabei abhängig von der Sendespannung und den in die zweite Sensorelektrode eingekoppelten Störsignalen.

Sobald ein Benutzer sich dem Kraftfahrzeugtürgriff annähert, stellt er bei geeigneter Annäherung eine kapazitive Kopplung zwischen seinem Körper und einer oder beiden Sensorelektroden her. Diese kapazitive Kopplung schaltet den Körper des Benutzers zu der bis dahin vorliegenden Kopplungsstrecke zwischen erster Sensorelektrode und zweiter Sensorelektrode kapazitiv hinzu. Diese Zuschaltung des menschlichen Körpers (oder einer Extremität) verändert das elektrische Netzwerk. Da der menschliche Körper elektrische Eigenschaften wie Widerstand, Kapazität und Induktivität aufweist (siehe z.B. WO 2006/040095 A2) hat, wird das Netzwerk aus Sensorelektroden, Steuereinrichtung, Auswerteeinrichtung sowie sonstigen Komponenten und Masse erweitert. Die Signalübertragung zwischen den Sensorelektroden wird entsprechend dem geänderten Netzwerk verändert. Die Auswerteeinrichtung erfasst eine derartige Änderung an der zweiten Sensorelektrode eingehenden Signale als charakteristisch für eine Annäherung eines Benutzers. Sonstige Umwelteinflüsse (Regen, Luftfeuchte etc.) verursachen andere Änderungen oder verlaufen so langsam, dass eine entsprechende Anpassung der Kopplung erfolgen kann (dies wird im weiteren erläutert).

Vorzugsweise weist die Sendeelektrode eine andere Größe auf als die Empfangselektrode.

Je größer die Empfangselektrode ausgebildet ist, desto mehr Störsignale werden empfangsseitig eingekoppelt. Wird über die Kopplung zwischen Steuereinrichtung und Auswerteeinrichtung die Signalübertragung zwischen Sendeelektrode und Empfangselektrode (erster und zweiter Sensorelektrode) derart eingestellt, dass eine Signalübertragung gerade eben möglich ist (die Signale liegen knapp detektierbar oberhalb der Umgebungsstörungen), so wird bei einer Annäherung der Hand eine massive Störung der groß ausgebildeten Empfangselektrode vorliegen. Die Sendeelektrode ist hingegen derart klein ausgebildet und so platziert, dass eine kapazitive Verlängerung von Signalen über den menschlichen Körper nicht erfolgen kann. Die detektierten Signale brechen ab. Diese Ausführungsform der Erfindung ist optimiert für eine Blockade der Signalübertragung zwischen den Elektroden durch die Annäherung eines Benutzers. Ein dauerhafter Abbruch der Signalübertragung zwischen den Elektroden aufgrund der Blockade wird als Annäherung eines Benutzers erkannt.

Wird andererseits die Sendeelektrode groß gegenüber der Empfangselektrode ausgebildet, so ist eine Kopplung der Sendeelektrode mit der Hand des Benutzers einfacher möglich. Die Hand kann in diesem Fall die Signalkopplung zwischen den Elektroden verbessern.

Durch entsprechende Auswahl der Elektrodengrößen ist demnach eine Auswahl des bevorzugten Funktionsprinzips, Signal-Absorption bzw. Störungseinkopplung einerseits oder Signalüberbrückung durch die Hand andererseits, möglich.

In einer bevorzugten Ausführungsform der Erfindung ist die Steuereinrichtung derart ausgebildet, dass an die erste Sensorelektrode eine Signalfolge mit einer Signalfolgen-Periodendauer angelegt wird.

Die Steuereinrichtung legt eine Folge von Spannungssignalen, z.B. Pulsen, an die erste Sensorelektrode an. Je nach Kopplung ist an der zweiten Sensorelektrode eine entsprechende Signalfolge detektierbar. Die Detektierbarkeit der an der zweiten Elektrode eingehenden Signalfolge hängt davon ab, ob eine Kopplung eines Benutzers mit beiden Sensorelektroden vorliegt.

Vorzugsweise vergleicht die Auswerteeinrichtung die Signale, welche sie an der zweiten Sensorelektrode erfaßt, mit einer Referenz-Signalfolge. Da zwischen Auswerteeinrichtung und Steuereinrichtung eine Kopplung besteht, kann die Auswerteeinrichtung Informationen über die von der Sendeeinrichtung aufgeprägte Signalfolge erhalten. Alternativ kann eine fest vorgegebene Signalfolge als Spannungssignal an die erste Sensorelektrode gelegt werden. Die Signalfolge kann durch die zeitlichen Abstände und Art der Pulsfolgen charakterisiert sein, wobei die Signalstärke je nach Abstimmung zwischen Sendeeinrichtung und Auswerteeinrichtung skalierbar ist.

Vorzugsweise ist die Auswerteeinrichtung derart ausgebildet, dass die Sendeeinrichtung zu einer Verringerung der Sendespannung veranlasst wird, falls innerhalb eines ersten vorgegebenen Zeitraums keine Referenz-Signalfolge erfasst wird.

Kann die Auswerteeinrichtung in den an der zweiten Sensorelektrode erfassten Signalen keine Referenz-Signalfolge erkennen, deutet dies auf eine unzureichende Kopplung zwischen den Sensorelektroden hin. Die Sendeeinrichtung veranlasst die Auswerteeinrichtung zu einer Erhöhung der Sendespannung, so dass der Anteil der von der Sensorelektrode stammenden unter die zweite Sensorelektrode eingekoppelten Signale an dem Gesamtsignal der zweiten Sensorelektrode ansteigt. Auf diese Weise wird die Kopplung an veränderliche Umgebungsbedingungen angepasst. Bewirken solche Umgebungsbedingungen eine Verminderung der Kopplung zwischen den Sensorelektroden, führt die Sendeeinrichtung entsprechend die Spannung nach, um wieder eine Kopplung herzustellen.

In einer bevorzugten Ausführungsform ist die Auswerteeinrichtung derart ausgebildet, dass sie die Sendeeinrichtung zu einer Verringerung der Sendespannung veranlaßt, falls innerhalb eines zweiten vorgegebenen Zeitraums eine vorgegebene Anzahl von Referenz-Signalfolgen erfaßt wird. Bewirken in diesem Fall Umgebungsbedingungen eine Verstärkung der Kopplung zwischen den Sensorelektroden, führt die Sendeeinrichtung entsprechend die Spannung nach, um wieder eine schwache Signalkopplung herzustellen.

Es ist im Rahmen der Erfindung demnach beabsichtigt, die Signalkopplung zwischen den Sensorelektroden derart einzustellen, dass Signale von der ersten Sensorelektrode gerade oberhalb des Rauschniveaus bzw. Niveaus der Störsignale in die zweite Sensorelektrode eingekoppelt werden. Eine Mehrzahl von in Folge empfangenen Signalfolgen bedeutet, dass die empfangenen Signale problemlos gegenüber den Störsignalen detektierbar sind. Die Sendespannung wird entsprechend verringert, z.B. um einen vorgegebenen Wert. Bei der bevorzugten Ausführung der Erfindung wird bei der Einrichtung bzw. im Netzwerk in geringen Zeitabständen die an die erste Sensorelektrode angelegte Sendespannung verändert. Die Auswerteeinrichtung veranlasst eine Erhöhung der Spannung, wenn in einem vorgegebenen Zeitraum kein Referenz-Signal an der zweiten Elektrode detektierbar ist. Sie veranlasst eine Verringerung der Spannung, wenn eine oder eine Mehrzahl von Signalfolgen erfasst wurde. Die von der ersten Sensorelektrode in die zweite Sensorelektrode gekoppelten Signale schwanken in ihrer Signalstärke daher pausenlos knapp oberhalb und unterhalb des detektierbaren Niveaus oder des Niveaus der Störsignale.

Durch dieses Vorgehen wird erreicht, dass eine sprunghafte und erhebliche Veränderung der Kopplung zwischen den Elektroden, wie sie beispielsweise durch die Annäherung eines Benutzers erfolgt, eine mehrfache aufeinanderfolgende Nachregelung der Sendespannung zur Folge hat. Im theoretischen Idealfall regelt die ungestörte Sensoreinrichtung nämlich die Sendespannung immer abwechselnd um einen Wert nach oben und anschließend, da eine Signalfolge empfangen wurde, um einen festen Betrag nach unten (dies wiederholt sich, solange der Türgriff aktiv ist). Langsam veränderliche Umwelteinflüsse erfordern eine Nachführung der mittleren Sendespannung in einzelnen Schritten über mehrere Zyklen. Wird die Spannung in kurzen Zeitabständen (z.B. alle 10ms) korrigiert, findet selten eine mehrfache Nachregelung in einer Richtung (Spannungserhöhung oder Spannungsverringerung) in Folge statt

Ein mehrfaches Nachregeln der Sendespannung in einer Richtung in Folge deutet demnach auf die Annäherung eines Benutzers hin. Nur durch einen Benutzer wird die Kopplungsstrecke zwischen den Elektroden derart beeinflusst, dass die Signale, je nach Ausbildung der Elektroden und deren Anordnung, für eine Mehrzahl von aufeinanderfolgenden Regelzyklen blockiert oder andererseits für eine Mehrzahl von aufeinanderfolgenden Regelzyklen übertragen werden.

Es ist eine im Fall der Benutzer-Annäherung eine mehrfache Nachregelung erforderlich, damit der Ursprungszustand erreicht ist, z.B. erstmalig eine Signalfolge nicht mehr erfasst wird. Je nach Anzahl der aufeinanderfolgenden und erforderlichen Nachregelungen kann verlässlich ein Zugriff eines Benutzers detektiert werden.

Vorteilhafte Ausbildungen der Erfindung und des erfindungsgemäßen Verfahrens sind in den Patentansprüchen dargestellt.

Die Erfindung wird nun anhand der beiliegenden Zeichnung näher erläutert.
Figur 1 zeigt ein Ersatzschaltbild eines Körperwiderstandes.
Figur 2 zeigt eine Prinzipskizze des erfindungsgemäßen Kraftfahrzeugtürgriffs.
Figur 3 zeigt ein Ersatzschaltbild des erfindungsgemäßen Erfassungssystems.

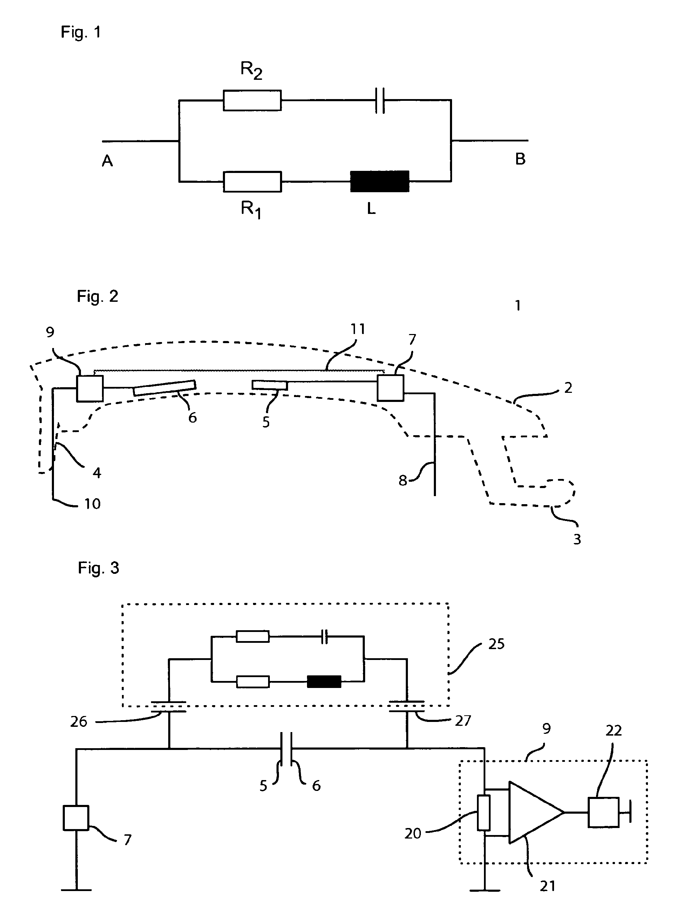

In Figur 1 ist ein äquivalentes Ersatzschaltbild der Impedanz des menschlichen Körpers dargestellt. Das entsprechende Ersatzschaltbild ist beispielsweise der oben bereits genannten DE 10 2004 048 956 A1 zu entnehmen und geht auf Untersuchungen von R. K. Cole zurück.

Das Ersatzschaltbild stellt die Impedanz des Körpers zwischen zwei Kontaktpunkten A und B am menschlichen Körper dar. In einer Parallelschaltung werden die Beiträge des Gefäßsystems und der intrazellularen Bestandteile des Körpers nachvollzogen. L repräsentiert die Induktivität der Blutgefäße während R₁ den Widerstand der geführten Flüssigkeiten wiedergibt. Die durch die Zellinternen Bestandteile beigetragenen Komponenten sind durch die Kapazität C und den Widerstand R₂ bezeichnet.

Es ist erkennbar, dass dieses Ersatzschaltbild eine komplexe Impedanz darstellt, wobei die einzelnen Werte grundsätzlich an jedes Individuum und die entsprechenden Kontaktpunkte A und B anzupassen ist. Ferner liegt zwischen den Kontaktpunkten auch eine (vorwiegend kapazitive) Kopplung mit der Erde vor, diese ist jedoch zum Verständnis der Erfindung nicht wesentlich.

In Figur 2 ist eine schematische Seitenansicht eines erfindungsgemäßen Kraftfahrzeugtürgriffs 1 gezeigt. Der Griff 1 weist ein Außengehäuse 2 auf. Das Griffgehäuse ist mit Verbindungsmitteln 3 und 4 an einem Kraftfahrzeug zu befestigen. Im Griffinneren ist eine Sendeelektrode 5 als erste Sensorelektrode angeordnet. In einem Abstand von etwa 30-40 mm ist eine Empfangselektrode 6 als zweite Sensorelektrode angeordnet. Die Fläche der Sendeelektrode 5 beträgt etwa 45 mm² während die Empfangselektrode 6 eine Fläche von etwa 200 mm² aufweist. Die Sendeelektrode 5 ist mit einer Steuereinrichtung 7 verbunden, welche über Zuleitungen 8 stromversorgt, masseverbunden und signalversorgt ist. Die Empfangselektrode 6 ist mit einer Auswerteeinrichtung 9 verbunden, die wiederum über eine Zu- und Ableitung 10 stromversorgt, masseversorgt und signalversorgt ist. Die Steuereinrichtung 7 und die Auswerteeinrichtung 9 enthalten bei diesem Ausführungsbeispiel jeweils Mikrocontroller. Die Steuereinrichtung 7 und die Auswerteeinrichtung 9 sind bei diesem Ausführungsbeispiel über eine Signalleitung 11 verbunden, um Steuervorgaben und Informationen zwischen beiden Einrichtungen auszutauschen.

Aus der Darstellung in Figur 2 und den genannten Maßen ist ersichtlich, dass ein den Türgriff hintergreifender Benutzer gleichzeitig eine kapazitive Kopplung mit beiden Elektroden 5 und 6 herstellen kann.

Im freien Betrieb bzw. im Leerlauf ohne Benutzerzugriff wird durch den Informations- bzw. Steuersignalaustausch zwischen den Einrichtungen 7 und 9 die Kopplung zwischen den Elektroden 5 und 6 in kurzen Perioden geregelt. Dabei wird die von der Einrichtung 7 angelegte Spannung erhöht, wenn die Auswerteeinrichtung 9 keine Signale an der Elektrode 6 detektieren kann. Andererseits wird die Spannung durch die Steuereinrichtung 7 verringert, wenn von der Auswerteeinrichtung 9 eine Signalfolge erfasst werden konnte, welche mit einer Referenz-Signalfolge übereinstimmt. Auf diese Weise wird die Kopplungsstrecke zwischen den Elektroden 5 und 6 an sich ändernde Umweltbedingungen, wie z.B. Benetzung des Gehäuses 2 durch Regenwasser oder Nebel, angepasst, indem die Sendespannung und Kopplung zwischen Elektroden verändert wird. Die Kopplung wird jederzeit in einem Kopplungsbereich um die Rausch- oder Störungsgrenze gehalten, so dass abwechselnd Signalkopplung vorliegt oder keine Signalkopplung erfassbar ist. Als Sendespannungen werden an der Sendeelektrode 5 veränderliche Spannungen um ca. 2,5 V-4 V angelegt, wobei jedoch die Spannungen je nach Umweltbedingungen, Abstand der Elektroden, Formgebung und Ausrichtung der Elektroden geringere oder höhere Spannungen möglich sind, z.B. 0,5 V- 20 V

Figur 3 zeigt ein Ersatzschaltbild der erfindungsgemäßen Einrichtung. In dem Ersatzschaltbild ist die Ansteuereinrichtung 7 wiederum schematisch dargestellt und mit der Elektrode 5 verbunden, welche eine Platte eines Kondensators darstellt. Die andere Platte 6 des Kondensators ist mit der Auswerteeinrichtung 9 verbunden. Die Auswerteeinrichtung 9 wird in dieser Ausführungsform durch einen Widerstand 20, einen Operationsverstärker 21 und eine nachgeschaltete Auswerteschaltung 22 gebildet.

Der Körper eines zugreifenden Benutzers 25 kann kapazitiv in das Netzwerk einkoppeln, wobei die kapazitive Kopplung mit den Elektroden 5 und 6 durch die Kondensatoren 26 und 27 dargestellt ist. Der menschliche Körper zwischen den kapazitiven Kopplungspunkten ist wiederum durch das in Figur 1 dargestellte Ersatzschaltbild wiedergegeben.

Tatsächlich koppelt der menschliche Körper in komplexerer Weise ein, da zusätzlich eine Kopplung des Körpers mit der durch die Erde gegebenen Masse und der Umgebung erfolgt, eine Berücksichtigung ist jedoch zum prinzipiellen Verständnis der Erfindung nicht erforderlich und daher nicht dargestellt.

Es ist ersichtlich, dass je nach Ausbildung der kapazitiven Kopplungen 26 und 27 und des menschlichen Netzwerks 25 das gesamte Netzwerk signifikant verändert wird und die Kopplungsstrecke eine erhebliche Änderung der Übertragungsqualität erfährt. Es werden durch den menschlichen Körper 25 ein zusätzlicher Signalpfad und gleichzeitig eine Störungsquelle für die an der Elektrode 6 eingekoppelten Signale gebildet. In dem dargestellten Beispiel mit einer Sendeelektrode 5 mit kleiner Oberfläche und einer großflächigen Empfangselektrode wird der Störungsbeitrag des Körpers zur Detektion genutzt.

Die im Ruhezustand rasch erfolgende Spannungsnachführung erfordert nun eine mehrfache Nachführung der Spannung um festgesetzte Spannungsbeträge. Die Auswerteeinrichtung 9 erfaßt, dass durch die Einkopplung der Störungen des Körpers 25 mehrmals hintereinander keine Signalfolge an der Elektrode 6 detektierbar ist. Die Signale werden durch die Störungen überdeckt. Unter Leerlauf-Bedingungen ist nur eine geringe Anzahl von aufeinanderfolgenden Nachführungen nötig, um wieder eine Signalfolge zu detektieren. Bei dem Ausführungsbeispiel wird üblicherweise wenigstens nach jeder 3.-4. Nachführung wieder eine Signalfolge detektiert. Wird für eine Mehrzahl von Signalfolgen, im genannten Ausführungsbeispiel eine Anzahl von sechs bis acht Signalfolgen, keine Signalfolge erfasst, deutet dies auf die Annäherung eines Benutzerkörperteils hin, welcher die erheblichen Störungen verursacht.

Der Benutzer verändert durch seine Ankopplung an das Netzwerk und durch seinen eigenen durch den Benutzerkörper bereitgestellten Impedanzanteil und Störungsanteil die Kopplung.

Im Rahmen der Erfindung sind zahlreiche Abwandlungen möglich. Insbesondere ist hervorzuheben, dass das System in höchst flexibler Weise an unterschiedliche Erfassungsverfahren angepasst werden kann. Je nach Ausbildung der Elektroden kann die Verstärkung der Signalkopplung zwischen den Elektroden oder die Verschlechterung der Signalkopplung oder Störungseinkopplung durch den Benutzer ausgewertet werden. Dies kann z.B. erreicht werden, indem nur eine der Elektroden oder beide Elektroden effektiv mit dem Benutzerkörper koppeln (z.B. durch eine große Elektrodenfläche oder eine Oberflächennahe Anordnung). Koppelt z.B. nur die Empfangselektrode in effektiver Weise mit dem Benutzerkörper, nicht jedoch die Sendeelektrode so werden die vom Benutzerkörper verursachten elektrischen Störungen in diese Elektrode eingekoppelt und die Signalübertragung zwischen den Elektroden wird durch die Störungen überdeckt.

Koppeln beide Elektroden effektiv mit dem Benutzer, kann die Impedanz des Benutzerkörpers als parallele Kopplungsstrekke die Signalübertragung verbessern. Im letztgenannten Fall dient dann eine Signalverstärkung zur Detektion eines Benutzers. Dem Fachmann ist klar, dass die Anordnung, Formgebung, Fläche, Abschirmung, der Abstand und die Spannung der Elektroden zur Einstellung der gewünschten Verhältnisse und Ansprechverhalten angepasst werden können.

## Patentansprüche

1. Kraftfahrzeugtürgriff (2) mit einer ersten Sensorelektrode (5),
**dadurch gekennzeichnet,**
**dass** im Kraftfahrzeugtürgriff (2) eine zweite Sensorelektrode (6) von der ersten Sensorelektrode (5) beabstandet angeordnet ist, so dass zwischen den Sensorelektroden eine Kopplungsstrecke ausgebildet ist,
die erste (5) und zweite (6) Sensorelektrode jeweils im Zugriffsbereich des Türgriffs derart angeordnet sind, dass durch einen zugreifenden Benutzer mit seinem Körper mit wenigstens einer Sensorelektrode (5, 6) eine kapazitive Kopplung herstellbar ist,
die erste Sensorelektrode (5) mit einer Steuereinrichtung (7) gekoppelt ist, welche an die erste Sensorelektrode (5) eine Sendespannung anlegen kann, so dass über die Kopplungsstrecke in der zweiten Sensorelektrode (6) Signale einkoppelbar sind,
die zweite Sensorelektrode (6) mit einer Auswerteeinrichtung (9) gekoppelt ist, welche an der zweiten Sensorelektrode (6) eingehende Signale auswerten kann, und
wobei Steuereinrichtung (7) und Auswerteeinrichtung (9) derart gekoppelt sind, dass die von der Steuereinrichtung angelegte Sendespannung abhängig von den durch die Auswerteeinrichtung erfassten Signalen ist.

2. Kraftfahrzeugtürgriff gemäß Anspruch 1, **dadurch gekennzeichnet, dass** die erste Sensorelektrode (5) als Sendeelektrode (5) wirkt und eine andere Größe aufweist als die als Empfangselektrode wirkende zweite Sensorelektrode (6).

3. Kraftfahrzeugtürgriff gemäß Anspruch 1, **dadurch gekennzeichnet, dass** die erste (5) und zweite Sensorelektrode (6) derart angeordnet sind, dass durch einen zugreifenden Benutzer mit seinem Körper gleichzeitig mit beiden Sensorelektrode eine kapazitive Kopplung herstellbar ist.

4. Kraftfahrzeugtürgriff gemäß einem der Ansprüche 1 bis 3, **dadurch gekennzeichnet, dass** die Steuereinrichtung (7) derart ausgebildet ist, dass an die erste Sensorelektrode (5) eine Signalfolge mit einer Signalfolgen-Periodendauer angelegt wird.

5. Kraftfahrzeugtürgriff gemäß Anspruch 4, **dadurch gekennzeichnet, dass** die Auswerteeinrichtung die an der zweiten Sensorelektrode erfassten Signale mit einer Referenz-Signalfolge vergleicht.

6. Kraftfahrzeugtürgriff gemäß Anspruch 5, **dadurch gekennzeichnet, dass** die Auswerteeinrichtung (9) derart ausgebildet ist, dass sie die Sendeeinrichtung (7) zu einer Erhöhung der Sendespannung veranlasst, falls innerhalb eines ersten vorgegebenen Zeitraums keine Referenz-Signalfolge erfasst wird.

7. Kraftfahrzeugtürgriff gemäß Anspruch 5 oder 6, **dadurch gekennzeichnet, dass** die Auswerteeinrichtung (9) derart ausgebildet ist, dass sie die Sendeeinrichtung (7) zu einer Verringerung der Sendespannung veranlasst, falls innerhalb eines zweiten vorgegebenen Zeitraums eine vorgegebene Anzahl von Referenz-Signalfolgen erfasst wird.

8. Kraftfahrzeugtürgriff gemäß Anspruch 6 oder 7, **dadurch gekennzeichnet, dass** der erste und/oder der zweite Zeitraum jeweils Vielfache der Signalfolgen-Periodendauer sind.

9. Verfahren zur Zugriffssteuerung an einem Kraftfahrzeug, wobei an dem Kraftfahrzeug ein Kraftfahrzeugtürgriff gemäß einem der Ansprüche 1 bis 7 ausgebildet ist,
**dadurch gekennzeichnet, dass** mit der Auswerteeinrichtung kontinuierlich oder periodisch an der zweiten Sensorelektrode (6) eingekoppelte Signale überwacht werden,
die von der Steuereinrichtung (7) an die erste Sensorelektrode (5) angelegte Spannung in Abhängigkeit von der Überwachung geregelt wird,
in Abhängigkeit von einer charakteristischen Änderung der überwachten Signale eine Annäherung eines Bedieners detektiert wird.

10. Verfahren gemäß Anspruch 9, **dadurch gekennzeichnet, dass** die Steuereinrichtung von der Auswerteeinrichtung veranlasst wird, die Sendespannung um einen vorgegebenen Betrag zu verringern, sobald eine vorgegebene Anzahl von vollständigen Signalfolgen in Folge empfangen wurde,
wobei dann, wenn eine vorgegebene Mehrzahl von Verringerungen innerhalb einer vorgegebenen Zeitdauer durchgeführt wurde, eine Annäherung eines Bedieners detektiert und signalisiert wird.

11. Verfahren gemäß Anspruch 9, **dadurch gekennzeichnet, dass** die Steuereinrichtung von der Auswerteeinrichtung veranlasst wird, die Sendespannung um einen vorgegebenen Betrag zu erhöhen, falls keine vollständigen Signalfolge empfangen wurde,
wobei dann, wenn eine vorgegebene Mehrzahl von Erhöhungen innerhalb einer vorgegebenen Zeitdauer durchgeführt wurde, eine Annäherung eines Bedieners detektiert und signalisiert wird.

12. Verfahren gemäß Anspruch 10 oder 11, **dadurch gekennzeichnet, dass** die vorgegebene Mehrzahl von Erhöhungen oder Verringerungen durch eine statistische Auswertung von einer Vielzahl von Zugriffsvorgängen ermittelt wird.

## Claims

1. A motor vehicle door handle (2) with a first sensor electrode (5), **characterised in that** arranged in the motor vehicle door handle (2) spaced from the first sensor electrode (5) there is a second sensor electrode (6) so that a coupling path is formed between the sensor electrodes, the first (5) and second (6) sensor electrode are each arranged in the access region of the door handle such that as a result of a user gaining access with his body a capacititive coupling is producible with at least one sensor (5, 6) the first sensor electrode (5) is coupled to a control device (7), which can apply a transmission voltage to the first sensor electrode (5) so that signals may be coupled into the second sensor electrode (6) via the coupling path, the second sensor electrode (6) is coupled to an analysis device (9), which can analyse signals coming into the second sensor electrode (6), and wherein the control device (7) and analysis device (9) are coupled such that the transmission voltage applied by the control device is dependent on the signals detected by the analysis device.

2. A motor vehicle door handle as claimed in claim 1, **characterised in that** the first sensor electrode (5) acts as a transmission electrode (5) and has a different size to the second sensor electrode (6), which acts as a receiving electrode.

3. A motor vehicle door handle as claimed in claim 1, **characterised in that** the first (5) and second sensor electrode (6) are arranged such that a capacitative coupling is producible by a user gaining access with his body with both sensor electrodes at the same time.

4. A motor vehicle door handle as claimed in claims 1 to 3, **characterised in that** the control device (7) is constructed so that a signal sequence with a signal sequence periodic time is applied to the first sensor electrode (5).

5. A motor vehicle door handle as claimed in claim 4, **characterised in that** the analysis device compares the signals detected at the second sensor electrode with a reference signal sequence.

6. A motor vehicle door handle as claimed in claim 5, **characterised in that** the analysis device (9) is so constructed that it causes the transmission device (7) to increase the transmission voltage if no reference signal sequence is detected within a first predetermined period of time.

7. A motor vehicle door handle as claimed in claim 5 or 6, **characterised in that** the analysis device (9) is so constructed that it causes the transmission device (7) to reduce the transmission voltage if a predetermined number of reference signal sequences is detected within a second predetermined period of time.

8. A motor vehicle door handle as claimed in claim 6 or 7, **characterised in that** the first and/or the second period of time are in each case multiples of the signal sequence periodic time.

9. A method of controlling access to a motor vehicle, wherein a motor vehicle door handle as claimed in one of claims 1 to 7 is constructed on the motor vehicle, **characterised in that** signals coupled in the second sensor electrode are monitored continuously or periodically with the analysis device, the voltage applied by the control device (7) to the first sensor electrode (5) is controlled in dependence on the monitoring process, the approach of a user is detected in dependence on a characteristic change in the monitored signals.

10. A method as claimed in claim 9, **characterised in that** the control device is caused by the analysis device to reduce the transmission voltage by a predetermined amount as soon as a predetermined number of complete signal sequences has been detected in succession, whereby when a predetermined number of reductions has been effected within a predetermined period of time, the approach of a user is detected and signalled.

11. A method as claimed in claim 9, **characterised in that** the control device is caused by the analysis device to increase the transmission voltage by a predetermined amount if no complete signal sequence has been received, whereby when a predetermined number of increases has been effected within a predetermined period of time the approach of a user is detected and signalled.

12. A method as claimed in claim 10 or 11, **characterised in that** the predetermined number of increases or reductions is determined by a statistical analysis of a plurality of access operations.

## Revendications

1. Poignée de porte de véhicule automobile (2) avec une électrode de capteur (5),
**caractérisée en ce que**
on agence dans la poignée de porte de véhicule automobile (2) une seconde électrode de capteur (6) à distance de la première électrode de capteur (5) de sorte qu'une section de couplage puisse être établie entre les électrodes de capteur,
les première (5) et seconde (6) électrodes de capteur sont agencées, respectivement, dans la zone d'accès de la poignée de porte de sorte qu'un couplage capacitif puisse être établi par un utilisateur en cours d'accès avec son corps via au moins une électrode de capteur (5, 6),
la première électrode de capteur (5) est couplée à un dispositif de commande (7), qui peut appliquer une tension d'envoi à la première électrode de capteur (5) de sorte que des signaux puissent être injectés dans la seconde électrode de capteur (6) via la section de couplage,
la seconde électrode de capteur (6) est couplée à un dispositif d'exploitation (9) qui peut exploiter des signaux entrant dans la seconde électrode de capteur (6), et
dans laquelle le dispositif de commande (7) et le dispositif d'exploitation (9) sont couplés de sorte que la tension d'envoi appliquée par le dispositif de commande soit dépendante des signaux détectés par le dispositif d'exploitation.

2. Poignée de porte de véhicule automobile selon la revendication 1, **caractérisée en ce que** la première électrode de capteur (5) opère comme électrode d'envoi et présente une autre grandeur que la seconde électrode de capteur (6) opérant comme électrode de réception.

3. Poignée de porte de véhicule automobile selon la revendication 1, **caractérisée en ce que** les première (5) et seconde (6) électrodes de capteur sont aménagées de sorte qu'un couplage capacitif puisse être établi par un utilisateur en cours d'accès par son corps simultanément avec les deux électrodes de capteur.

4. Poignée de porte de véhicule automobile selon l'une quelconque des revendications 1 à 3, **caractérisée en ce que** le dispositif de commande (7) est conformé de sorte que soit appliquée, sur la première électrode de capteur (5), une succession de signaux avec une durée de période.

5. Poignée de porte de véhicule automobile selon la revendication 4, **caractérisée en ce que** le dispositif d'exploitation compare les signaux détectés sur la seconde électrode de capteur à une succession de signaux de référence.

6. Poignée de porte de véhicule automobile selon la revendication 5, **caractérisée en ce que** le dispositif d'exploitation (9) est conformé de sorte qu'il amène le dispositif de commande (7) à augmenter la tension d'envoi au cas où aucune succession de signaux de référence n'est détectée dans un premier intervalle de temps prédéterminé.

7. Poignée de porte de véhicule automobile selon la revendication 5 ou 6, **caractérisée en ce que** le dispositif d'exploitation (9) est conformé de sorte qu'il incite le dispositif de commande (7) à réduire la tension d'envoi au cas où un nombre prédéterminé de successions de signaux de référence est détecté dans un second intervalle de temps prédéterminé.

8. Poignée de porte de véhicule automobile selon la revendication 6 ou 7, **caractérisée en ce que** les premier et/ou second intervalles de temps sont respectivement des multiples de la durée de période de la succession de signaux.

9. Procédé de commande d'accès à un véhicule automobile, dans lequel une poignée de porte de véhicule automobile selon l'une quelconque des revendications 1 à 7 est formée sur le véhicule automobile,
**caractérisé en ce que** l'on surveille avec le dispositif d'exploitation les signaux injectés en continu ou périodiquement sur la seconde électrode de capteur,
la tension appliquée par le dispositif de commande (7) sur la première électrode de détection (5) est régulée en fonction de la surveillance et
on détecte la proximité d'un utilisateur en fonction d'une modification caractéristique des signaux surveillés.

10. Procédé selon la revendication 9, **caractérisé en ce que**
le dispositif de commande est amené par le dispositif d'exploitation à réduire la tension d'envoi d'un montant prédéterminé au cas où aucune succession de signaux complète ne serait reçue,
dans lequel, si une pluralité prédéterminée de réductions sur une période de temps prédéterminée était réalisée, la proximité d'un utilisateur est détectée et signalée.

11. Procédé selon la revendication 9, **caractérisé en ce que**
le dispositif de commande est amené par le dispositif d'exploitation à augmenter la tension d'envoi d'un montant prédéterminé au cas où aucune succession de signaux complète ne serait reçue,
dans lequel, si une pluralité prédéterminée d'augmentations sur une période de temps prédéterminée était réalisée, la proximité d'un utilisateur est détectée et signalée.

12. Procédé selon la revendication 10 ou 11, **caractérisé en ce que** la pluralité prédéterminée d'augmentations ou de réductions est détectée par une exploitation statistique d'un multiple d'opérations d'accès.
